# EUROPÄISCHE PATENTSCHRIFT

(11) **EP 2 052 170 B1**
(45) Veröffentlichungstag und Bekanntmachung des Hinweises auf die Patenterteilung: **21.04.2010**
(21) Anmeldenummer: 07764329.4
(22) Anmeldetag: 18.05.2007
(51) Int. Cl.: F16J 15/08

(54) **ZYLINDERKOPFDICHTUNG**
CYLINDER HEAD SEAL
JOINT DE CULASSE

(30) Priorität: 16.08.2006 DE 102006038286
(43) Veröffentlichungstag der Anmeldung: 29.04.2009
(73) Patentinhaber: Federal-Mogul Sealing Systems GmbH, 57562 Herdorf (DE)
(72) Erfinder: CHI, Mun-Ho, 51373 Leverkusen (DE)
(74) Vertreter: Kurig, Thomas
(86) Internationale Anmeldenummer: PCT/DE2007/000907
(87) Internationale Veröffentlichungsnummer: WO 2008/019638

(56) Entgegenhaltungen:
- WO-A-2004/076893
- DE-A1- 4 105 367
- GB-A- 697 854
- US-A- 5 199 723
- US-A1- 2003 062 691

## Beschreibung

Die Erfindung betrifft eine Zylinderkopfdichtung, gebildet durch mindestens eine metallische Lage, in welcher Brennraumdurchgangsöffnungen, Mediendurchgangslöcher, Schraubendurchgangslöcher oder dergleichen Ausnehmungen eingebracht sind.

Die WO-A 2004/076893 offenbart eine Zylinderkopf-Flachdichtung mit mindestens einer metallischen Lage, in der mindestens eine Zylinderdurchgangsöffnung und mindestens eine weitere Durchgangsöffnung vorgesehen ist, wobei ein erster Verformungsbegrenzer zumindest bereichsweise um jeweils mindestens eine Zylinderdurchgangsöffnung herum und auf der der Zylinderdurchgangsöffnung abgewandten Seite des ersten Verformungsbegrenzers eine durchgehend um die Zylinderdurchgangsöffnung herumlaufende Sicke zu Dichtzwecken ausgebildet ist, wobei weiterhin auf der dem ersten Verformungsbegrenzer abgewandten Seite der Sicke im Bereich der Umfangskante und/oder der mindestens einen weiteren Durchgangsöffnung ein zweiter Verformungsbegrenzer vorgesehen ist, der in Form einer wellen- oder trapezförmigen Profilierung ausgebildet ist.

Eine von vielen Anforderungen an eine Zylinderkopfdichtung ist, durch die Wahl geeigneter Maßnahmen die Durchbiegung unter anderem der Nockenwellengassen zu optimieren. Es stellt sich heraus, dass Verformungsbegrenzer dafür am besten geeignet sind.

Auch wenn in der WO-A 2004/076893 bereits randbereichsseitige Verformungsbegrenzer offenbart sind, verlaufen selbige parallel zu den jeweiligen Randbereichen, wobei hier nachteilig ist, dass die Verformungsbegrenzer nur schwer zu erzeugen sind und in den kritischen Bereichen aufgrund ihrer Anordnung keine optimale Wirkung entfalten.

Die US 2003/0062691 offenbart eine Zylinder kopf- Flachdichtung nach dem Oberbegriff des Anspruchs 1.

Der Erfindung liegt die Aufgabe zugrunde, eine Zylinderkopfdichtung dahingehend weiterzubilden, dass auch für die angesprochenen kritischen Dichtbereiche eine praktikable preiswerte Lösung herbeigeführt werden kann, bei welcher herkömmliche Maschinen zum Einsatz gelangen.

Diese Aufgabe wird gelöst durch eine Zylinderkopfdichtung, gebildet durch mindestens eine metallische Lage, in welcher Brennraumdurchgangsöffnungen, Mediendurchgangslöcher, Schraubendurchgangslöcher oder dergleichen Ausnehmungen eingebracht sind, wobei zumindest in einzelnen Randbereichen der zumindest einen Lage mit bestimmten Abstand zur Lagenkante mindestens eine Mediendichtsicke angeordnet ist und im Bereich zwischen der randseitigen Mediendichtsicke und der zugehörigen Lagenkante zumindest bereichsweise Sicken vorgesehen sind, die unter einem vorgebbaren Winkel in die Lagenkante einlaufen. Wobei die Sicken (12) durch Prägen in den randseitigen Bereich (9) außerhalb der Mediendichtsicke (8) eingebracht sind, wobei einzelne gleichartig oder ungleich ausgebildete Sicken (12) eine Sickengruppe (a) bildend nebeneinander verlaufen, die über einen erhabenen Bereich (13) mit mindestens einer weiteren Sicke (12), respektive Sickengruppe (a), gleicher oder anderer Kontur verbunden sind.

Im Gegensatz zum Stand der Technik wird hiermit eine praktikable Lösung aufgezeigt, wie es durch die konkrete Sickenausrichtung möglich ist, die Sicken bis zur Materialkante hin zu prägen. Vorteilhafterweise verlaufen die Sicken unter einem Winkel von etwa 90° in die jeweilige Lagenkante.

Durch die erfindungsgemäße Maßnahme wird ein so genannter Randsickenstopper vorgeschlagen, der einfach in die angesprochenen Randbereiche eingebracht werden kann. Das Prägewerkzeug kann bedarfsweise über die Lagenkante hinausragen, um sicherzugehen, dass die jeweilige Lagenkante auch wirklich vom Werkzeug eingeschlossen wird. Durch diese Anordnung ist eine hohe Ausnutzung des Lagenmaterials möglich.

Die Anordnungsdichte, Anzahl und die Geometrie der Randsickenstopper können in beliebiger Form ausgeführt werden, wodurch die Steifigkeit des gesamten Randsickenstoppers variabel gestaltbar ist.

Des Weiteren kann eine bereichsweise asymmetrische Steifigkeit des Randsickenstoppers realisiert werden, beispielsweise hat die Auslassseite eine höhere Steifigkeit bzw. Ziehhöhe als die Einlassseite.

Die Randsickenstopper bildenden Sicken können, einem weiteren Gedanken der Erfindung gemäß, durch nebeneinander verlaufende Vollsicken gebildet werden.

Vielfach werden Zylinderkopfdichtungen aus Funktionslagen und Distanzlagen gebildet, so dass es, einem weiteren Gedanken der Erfindung gemäß, ebenfalls denkbar ist, die Sicken entweder nur in die Funktionslage, nur in die Distanzlage oder aber in alle Lagen einzubringen. Damit ist eine gewisse Materialwahlmöglichkeit vorhanden, da die Distanzlage meist aus einem Metall anderer Güte besteht als die Funktionslage. Die letzte Version macht dann Sinn, wenn zum Beispiel eine größere Stopperhöhe benötigt wird, die nicht auf einer einzelnen Lage zu prägen ist.

Mit dem Erfindungsgegenstand werden darüber hinaus folgende positive Effekte erzielt:
- Ausnutzung des verbleibenden Platzes zwischen den äußeren Mediendichtsicken (meist Halbsicken) und der zugehörigen Lagenkante soll möglichst hoch sein, damit der Effekt des Randsickenstoppers erkennbar bleibt.
- Die Steifigkeit/Wirkhöhe des Randsickenstoppers ist mit einfachen Werkzeugen variabel gestaltbar, so dass die Anzahl der Sickenelemente und/oder deren Geometrie in einfacher Weise angepasst werden kann, um den vielfältigen Zylinderkopfausbildungen gerecht werden zu können.

Der Erfindungsgegenstand ist anhand eines Ausführungsbeispiels in der Zeichnung dargestellt und wird wie folgt beschrieben. Es zeigen:
- Figur 1: Teildarstellung einer Zylinderkopfdichtung;
- Figur 2: Ansicht A gemäß Figur 1.

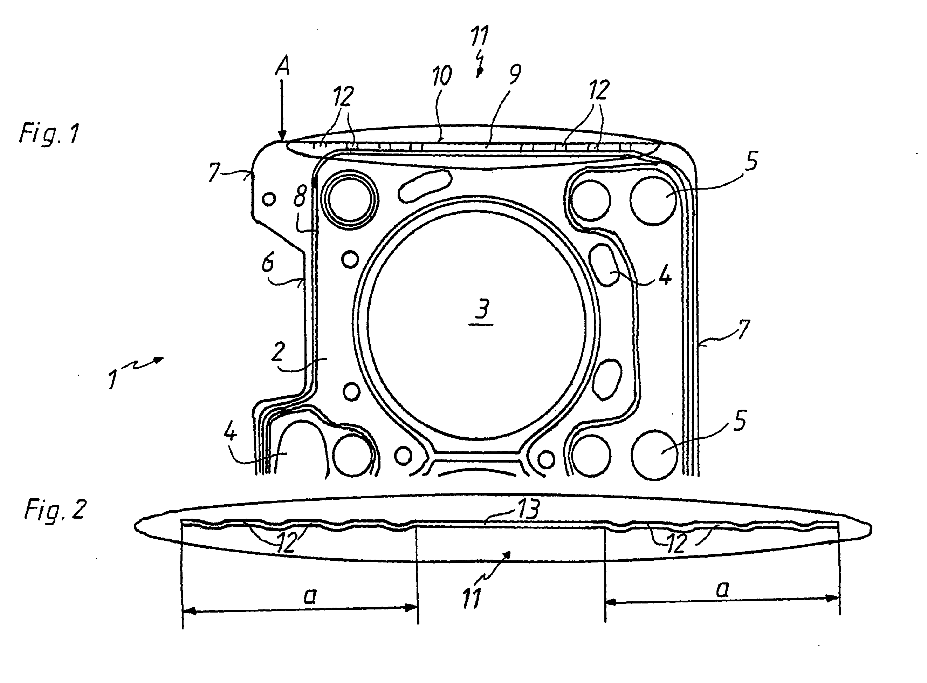

Figur 1 zeigt eine Zylinderkopfdichtung 1, die in diesem Beispiel gebildet wird durch eine metallische Lage 2, im Bereich derer Brennraumdurchgangsöffnungen 3, Mediendurchgangslöcher 4 sowie Schraubendurchgangslöcher 5 eingebracht sind. Die metallische Lage 2 besitzt eine spezielle Außenkontur 6, die in Abhängigkeit vom jeweiligen motorischen Einsatzfall unterschiedlich ausgeführt wird.

Im Randbereich 7 der metallischen Lage 2 ist in diesem Beispiel mindestens eine umlaufend ausgebildete Mediendichtsicke 8 vorgesehen. Erfindungsgemäß wird der Bereich 9, der zwischen der Mediendichtsicke 8 und der Lagenkante 10 verläuft, ausgenutzt, um hier einen so genannten Randsickenstopper 11 einzubringen, der bis in die Lagenkante 10 einläuft. Der Randsickenstopper 11 wird hierbei gebildet durch etwa unter einem Winkel von 90° in die Lagenkante 10 einlaufende Sicken 12, die durch ein Prägewerkzeug (nicht dargestellt) im Bereich 9 der metallischen Lage 2 eingebracht werden.

Die Sicken 12 sind durch miteinander verbundene Vollsicken gebildet. Dargestellt sind mehrere Vollsickengruppen a, die über einen erhabenen Bereich 13 miteinander verbunden sind.

Figur 2 zeigt die Ansicht A gemäß Figur 1.

Der hier dargestellte Randsickenstopper 11 stellt lediglich eine von mehreren Ausführungsmöglichkeiten dar. Gleiches gilt für den Einlaufwinkel der jeweiligen Sicken 12 in die jeweilige Lagenkante 10.

Sofern die metallische Lage 2 mit mindestens einer weiteren, eine Distanz- oder Funktionslage bildende Lage in Wirkverbindung steht, kann der jeweilige Randsickenstopper in mindestens eine weitere Lage eingebracht werden, um auf diese Weise eine größere Stopperhöhe realisieren zu können.

## Patentansprüche

1. Zylinderkopfdichtung, gebildet durch mindestens eine metallische Lage (2), in welcher Brennraumdurchgangsöffnungen (3), Mediendurchgangslöcher (4), Schraubendurchgangslöcher (5) oder dergleichen Ausnehmungen eingebracht sind, wobei zumindest in einzelnen Randbereichen (7) der zumindest einen Lage (2) mit bestimmten Abstand zur Lagenkante (10) mindestens eine Mediendichtsicke (8) angeordnet ist und im Bereich zwischen der randseitigen Mediendichtsicke (8) und der zugehörigen Lagenkante (10) zumindest bereichsweise Sicken (12) vorgesehen sind, die unter einem vorgebbaren Winkel in die Lagenkante (10) einlaufen,
**dadurch gekennzeichnet, dass** die Sicken (12) durch Prägen in den randseitigen Bereich (9) außerhalb der Mediendichtsicke (8) eingebracht sind, wobei einzelne gleichartig oder ungleich ausgebildete Sicken (12) eine Sickengruppe (a) bildend nebeneinander verlaufen, die über einen erhabenen Bereich (13) mit mindestens einer weiteren Sicke (12), respektive Sickengruppe (a), gleicher oder anderer Kontur verbunden sind.

2. Zylinderkopfdichtung nach Anspruch 1, **dadurch gekennzeichnet, dass** die Sicken (12) unter einem Winkel von etwa 90° in die Lagenkante (10) einlaufen.

3. Zylinderkopfdichtung nach Anspruch 1 oder 2, **dadurch gekennzeichnet, dass** die Sicken (12) durch nebeneinander verlaufende Vollsicken gebildet sind.

4. Zylinderkopfdichtung nach einem der Ansprüche 1 bis 3, wobei die metallische Lage (2) mit mindestens einer weiteren Lage zusammenwirkt, **dadurch gekennzeichnet, dass** die Sicken (12) in der weiteren Lage vorgesehen sind.

5. Zylinderkopfdichtung nach einem der Ansprüche 1 bis 3, **dadurch gekennzeichnet, dass** die Sicken (12) sowohl in der metallischen Lage (2) als auch im Bereich der weiteren Lage eingebracht sind.

## Claims

1. A cylinder head gasket, formed through at least one metal layer (2), in which combustion chamber through-openings (3), media through-holes (4), screw through-holes (5) or such clearances are provided, wherein at least in individual marginal regions (7) of the at least one layer (2) with defined spacing to the layer edge (10) at least one media sealing crease (8) is arranged and in the region between the marginal media sealing crease (8) and the corresponding layer edge (10) at least in areas creases (12) are provided which converge with the layer edge (10) at a predeterminable angle, **characterized in that** the creases (12) are provided in the marginal region (9) outside the media sealing crease (8) through stamping, wherein individual identically or differently formed creases (12) forming a group of creases (a) run next to one another which via a raised region (13) are connected with at least one additional crease (12) or group of creases (a) of identical or different contour.

2. The cylinder head gasket according to Claim 1, **characterized in that** the creases (12) converge on the layer edge (10) at an angle of approximately 90°.

3. The cylinder head gasket according to Claim 1 or 2, **characterized in that** the creases (12) are formed through full creases running next to one another.

4. The cylinder head gasket according to any one of the Claims 1 to 3, wherein the metal layer (2) interacts with at least one additional layer, **characterized in that** the creases (12) are provided in the additional layer.

5. The cylinder head gasket according to any one of the Claims 1 to 3, **characterized in that** the creases (12) are provided both in the metal layer (2) as well as in the region of the additional layer.

## Revendications

1. Joint de culasse, formé par au moins une couche (2) métallique, dans laquelle des ouvertures de passage de chambre de combustion (3), des trous de passage de fluide (4), des trous de passage de vis (5) ou des évidements similaires sont introduits, au moins une moulure d'étanchéité de fluide (8) étant disposée au moins dans des zones périphériques (7) individuelles de la couche (2) au nombre minimum de un à une certaine distance de l'arête de couche (10) et des moulures (12) étant prévues au moins par endroits dans la zone entre la moulure d'étanchéité de fluide (8) côté bordure et l'arête de couche (10) spécifique, lesquelles moulures entrent dans l'arête de couche (10) sous un angle prédéfinissable,
**caractérisé en ce que** les moulures (12) sont introduites par estampage dans la zone (9) côté bordure à l'extérieur de la moulure d'étanchéité de fluide (8), certaines moulures (12) de conception identique ou différente étant agencées les unes à côté des autres en formant un groupe de moulures (a), lesquelles sont reliées par une zone (13) proéminente à au moins une autre moulure (12), respectivement un groupe de moulures (a), de conception identique ou différente.

2. Joint de culasse selon la revendication 1, **caractérisé en ce que** les moulures (12) entrent dans l'arête de position (10) sous un angle d'environ 90°.

3. Joint de culasse selon la revendication 1 ou 2, **caractérisé en ce que** les moulures (12) sont formées par des moulures pleines agencées les unes à côté des autres.

4. Joint de culasse selon l'une quelconque des revendications 1 à 3, la couche (2) métallique coopérant avec au moins une autre couche, **caractérisé en ce que** les moulures (12) sont prévues dans l'autre couche.

5. Joint de culasse selon l'une quelconque des revendications 1 à 3, **caractérisé en ce que** les moulures (12) sont introduites aussi bien dans la couche (2) métallique que dans la zone de l'autre couche.
